# EUROPÄISCHE PATENTANMELDUNG

(11) **EP 4 296 043 A1**
(43) Veröffentlichungstag der Anmeldung: **27.12.2023**
(21) Anmeldenummer: 23179531.1
(22) Anmeldetag: 15.06.2023
(51) Int. Cl.: B29C 70/44, B29C 33/26, B29C 33/48

(54) **WERKZEUG ZUM FERTIGEN VON BAUTEILEN MIT KOMPLEXER GEOMETRIE**

(30) Priorität: 20.06.2022 DE 102022115306
(71) Anmelder: Elbe Flugzeugwerke GmbH, 01109 Dresden (DE)
(72) Erfinder: Seiferth, Vincent, 01109 Dresden (DE)
(74) Vertreter: LKGLOBAL Lorenz & Kopf Patentanwalt Attorney at Law PartG mbB

(57) **Zusammenfassung**

Es ist ein Werkzeug (100) zum Herstellen eines Bauteils (200) mit mindestens einer Oberfläche (210) mit komplexer Geometrie angegeben. Das Werkzeug (100) weist einen Boden (110) und eine Mehrzahl von Seitenwänden (121, 122, 123, 124) auf. Der Boden (110) und die Mehrzahl von Seitenwänden (121, 122, 123, 124) sind so zueinander befestigbar, dass ein Innenvolumen (125) gebildet wird, in welchem das Bauteil (200) durch Vakuuminfusion formbar ist. Jeweils benachbarte Seitenwände der Mehrzahl von Seitenwänden (121, 122, 123, 124) sind in einem vorgegebenen Winkel zueinander angeordnet. Der Boden (110) schließt umlaufend gasdicht mit den Seitenwänden (121, 122, 123, 124) ab. Jeweils benachbarte Seitenwände der Mehrzahl von Seitenwänden (121, 122, 123, 124) liegen in einem gegenseitigen Kontaktbereich gasdicht aneinander. Mindestens eine Seitenwand (121, 122, 123, 124) ist von dem Boden wegbewegbar, um einen Zugang zu einem ausgehärteten Bauteil (200) in dem Innenvolumen (125) zu ermöglichen, so dass das Bauteil (200) aus dem Innenvolumen (125) entnehmbar ist.

## Beschreibung

### Technisches Gebiet

Die vorliegende Beschreibung betrifft allgemein das technische Gebiet der Fertigungstechnik und betrifft insbesondere ein Werkzeug zum Herstellen eines Bauteils mit mindestens einer Oberfläche mit komplexer Geometrie. Bei dem Bauteil kann es sich beispielsweise um ein Faserverbundbauteil handeln.

### Technischer Hintergrund

Faserverbundbauteile werden üblicherweise hergestellt, indem ein Grundmaterial in flüssigem Zustand mit verstärkenden Fasern versetzt wird und das Grundmaterial dann einem Aushärtungsvorgang zugeführt wird. Wenn das Faserverbundbauteil aushärtet, kann es verschiedene Formen annehmen. Beispielsweise wird das Grundmaterial in flüssigem Zustand in eine Form gegossen und härtet in dieser Form aus. Dann nimmt das Grundmaterial die Gestalt der Gussform an.

Das Grundmaterial kann in flüssigem Zustand den Fasern beigegeben werden. Dies sorgt dafür, dass die Fasern von dem flüssigen Grundmaterial umgeben werden und die Fasern dann in das ausgehärtete Grundmaterial integriert sind. Die Fasern können als lose Fasern oder als geordnete oder gewebte Fasern (beispielsweise in einer Matrixform) in der Gussform angeordnet sein, bevor das flüssige Grundmaterial in die Gussform gegossen wird. Es ist aber auch denkbar, dass zunächst das Grundmaterial in eine Gussform gegossen wird und dann die Fasern in das noch flüssige Grundmaterial eingebracht werden, beispielsweise indem ein Fasergelege auf die Oberfläche des Grundmaterials gelegt wird und dann in das noch flüssige Grundmaterial einsinkt.

Faserverbundbauteile haben den Vorteil, dass sie in nahezu jeder Form und Gestalt gegossen werden können. Sie zeichnen sich durch eine hohe mechanische Widerstandsfähigkeit aus. Faserverbundbauteile können punktuell mechanisch verstärkt werden, indem an bestimmten Positionen mehr Fasern oder stärkere Fasern eingebracht werden.

Wenn ein Faserverbundbauteil in der Gussform ausgehärtet ist, wird das Faserverbundbauteil aus der Gussform entnommen. Aus diesem Grund können nicht sämtliche Formen eines Faserverbundbauteils auf diese Weise hergestellt werden, weil nicht jede Gussform es aufgrund ihrer Gestalt erlaubt, dass ein ausgehärtetes Faserverbundbauteil aus der Gussform entnommen wird. Demnach kann es mit hohem Aufwand verbunden sein, Faserverbundbauteile bestimmter Geometrien herzustellen.

US 2020 / 0 376 719 A1 beschreibt eine mehrteilige Vorrichtung bestehend aus mehreren Segmenten zum Herstellen eines großen Bauteils, wie eines Rotorblatts für eine Windturbine. Die Vorrichtung erlaubt es, dass die Segmente, die einen Innenraum teilweise umgeben bzw. abschließen, entfernt werden. Weil die Vorrichtung mehrteilig ist, können diese den Innenraum umgebenden Segmente auf einfachere Weise platziert und wieder aus ihrer Position entfernt werden.

### Beschreibung

Es kann als Aufgabe betrachtet werden, den Vorgang des Herstellens eines Bauteils mit einer Gussform für beliebige Formen des Bauteils zu vereinfachen.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist ein Werkzeug zum Herstellen eines Bauteils mit mindestens einer Oberfläche mit komplexer Geometrie angegeben. Das Werkzeug weist einen Boden, eine Mehrzahl von orthogonal zueinander ausgerichteten Seitenwänden und einen Rahmen auf. Der Boden und die Mehrzahl von Seitenwänden sind in dem Rahmen so zueinander befestigt, dass ein Innenvolumen gebildet wird, in welchem das Bauteil durch Vakuuminfusion formbar ist. Die Seitenwände haben zu dem Innenvolumen hin eine ebene Oberfläche. Jeweils benachbarte Seitenwände der Mehrzahl von Seitenwänden sind in einem vorgegebenen Winkel zueinander angeordnet. Als jeweils benachbarte Seitenwände sind hier diejenigen Seitenwände zu verstehen, welche sich punktuell oder entlang einer Kontaktlinie oder Kontaktfläche berühren, um das Innenvolumen seitlich zu begrenzen. Der Boden schließt umlaufend gasdicht mit den Seitenwänden ab. Jeweils benachbarte Seitenwände der Mehrzahl von Seitenwänden liegen in einem gegenseitigen Kontaktbereich gasdicht aneinander. Mindestens eine Seitenwand ist von dem Boden wegbewegbar, um einen Zugang zu einem ausgehärteten Bauteil in dem Innenvolumen zu ermöglichen, so dass das Bauteil aus dem Innenvolumen entnehmbar ist. Die Mehrzahl von Seitenwänden ist so an dem Rahmen befestigt, dass mindestens eine der Seitenwände über ein Scharmier mit dem Rahmen verbunden und mit Bezug zu dem Boden schwenkbar ist.

Das Werkzeug kann beispielsweise vier Seitenwände aufweisen, ohne dass die Anzahl der Seitenwände jedoch hierauf beschränkt ist. Wenn im Folgenden beispielhaft auf vier Seitenwände Bezug genommen wird, so ist zu verstehen, dass es sich hier lediglich um ein nicht einschränkendes Beispiel handelt.

Der Boden und die Seitenwände begrenzen das Innenvolumen an fünf von sechs Flächen. Der Boden bildet dabei die untere Fläche, auf welcher das Bauteil oder das für das Bauteil verwendete Grundmaterial üblicherweise aufliegt. Die Seitenwände bilden seitliche Flächen, welche das Bauteil seitlich abstützen. Die dem Boden gegenüberliegende Fläche ist zunächst noch frei. Insbesondere wird das Grundmaterial in einem flüssigen Zustand in das Innenvolumen eingebracht, wo sich das Grundmaterial der Gestalt des Innenvolumens, d.h. den Oberflächen des Bodens und der Seitenwände, anpasst. Nun härtet das Grundmaterial aus und hat die Form des Innenvolumens angenommen.

Das Innenvolumen ist gasdicht abgeschlossen an den Stellen, an denen der Boden an den Seitenwänden anliegt und auch dort, wo die Seitenwände aneinander anliegen. Das bedeutet, dass ein in dem Innenvolumen befindliches flüssiges Grundmaterial für das herzustellende Bauteil das Innenvolumen ungewollt nicht verlassen kann. Wird die noch freie Fläche (die obere Fläche, welche dem Boden gegenüberliegt) des Innenvolumens gasdicht geschlossen, kann das Innenvolumen unter Vakuum gesetzt werden.

Beispielsweise wird das so gebildete Innenvolumen mit einer Vakuumfolie abgedeckt, um in dem Innenvolumen ein Vakuum erzeugen zu können. Aus dem Innenvolumen wird mit Hilfe einer Vakuumpumpe das darin befindliche Gas bzw. die darin befindliche Luft abgesaugt. Hierbei wird die Vakuumfolie durch den äußeren Atmosphärendruck in Richtung des Bodens und der Seitenwände gepresst und übt einen Druck auf das in dem Innenvolumen befindliche Grundmaterial des zu fertigenden Bauteils aus. Unter Druck härtet dann das Grundmaterial aus. Nach Abschluss des Aushärtungsvorgangs kann das Bauteil aus dem Innenvolumen entnommen werden.

Um dieses Entnehmen des Bauteils aus dem Innenvolumen zu ermöglichen, ist das Werkzeug modular zerlegbar. So kann mindestens eine Seitenwand von dem Boden wegbewegt werden, um Zugang zu dem Bauteil zu erlangen. Dies ist insbesondere dann vorteilhaft, wenn die Seitenwände orthogonal aufeinander stehen. Wenn ein Bauteil in einem solchen Innenvolumen aushärtet, kann das Bauteil nicht ohne Weiteres aus dem Innenvolumen entnommen werden, weil das ausgehärtete Grundmaterial teilweise an den Seitenwänden haftet. Außerdem erschwert die Tatsache, dass die Seitenwände nicht schräg verlaufen, das Entnehmen des Bauteils aus dem Innenvolumen. Das ausgehärtete Bauteil müsste entlang der Seitenwände gezogen werden, wodurch mitunter eine nennenswerte Reibungskraft erzeugt wird.

Weil die Seitenwände von dem Boden wegbewegbar sind, kann zunächst ein Bauteil in dem Innenvolumen durch Vakuuminfusion geformt werden, indem das Innenvolumen mit flüssigem Grundmaterial befüllt wird, welches die gewünschte Form annimmt, insbesondere die komplexe Geometrie des Bodens sowie orthogonal zueinander ausgerichtete Seitenwände. Das Bauteil härtet in dem Innenvolumen aus. Nun kann mindestens eine Seitenwand von dem Boden wegbewegt werden, wodurch der Zugang zu dem Bauteil in dem Innenvolumen ermöglicht wird. Das Bauteil kann nun aus dem Innenvolumen entnommen werden.

Es können auch mehr als eine Seitenwand von dem Boden wegbewegt werden. Beispielsweise können alle Seitenwände von dem Boden wegbewegt werden, um sämtliche Seitenflächen des ausgehärteten Bauteils freizugeben. In diesem Zustand liegt das Bauteil einzig auf dem Boden auf und kann hiervon nach oben gehoben werden.

Das hier beschriebene Werkzeug ist modular zerlegbar, um den Zugang zu dem ausgehärteten Bauteil zu erlauben. Weiterhin ermöglicht es das Werkzeug, den Boden auszuwechseln, wodurch Bauteile mit unterschiedlicher Oberflächengeometrie hergestellt werden können.

Mit dem hier beschriebenen Werkzeug können vergleichsweise große Bauteile hergestellt werden, bei denen eine Oberfläche eine komplexe Geometrie, beispielsweise eine mehrfach gekrümmte Oberfläche, hat und bei denen die Seitenflächen und die der mehrfach gekrümmten Oberfläche gegenüberliegende Fläche eben sind und zueinander orthogonal verlaufen. Damit können insbesondere solche Bauteile hergestellt werden, welche aus welchen Gründen auch immer eine mehrfach gekrümmte Oberfläche haben und die anderen Oberflächen dennoch eben und orthogonal zueinander verlaufen, so dass verschiedene solcher Bauteile nebeneinander angeordnet werden können und dabei ein sehr geringes vorgegebenes Spaltmaß (d.h. Abstand zwischen aneinander angrenzenden Flächen benachbarter Bauteile) erreicht werden kann. Das hat den Vorteil, dass solche Bauteile beispielsweise als äußere Verkleidungselemente von Gebäuden verwendet werden können. Das niedrige Spaltmaß sorgt beispielsweise für eine optisch durchgängige äußere Fläche und für eine gute thermische Isolierung.

Das hier beschriebene Bauteil kann ein Bauteil sein, welches aus einem ausgehärteten flüssigen Grundmaterial besteht. Beispielsweise kann hierfür ein Kunststoff oder ein Harz verwendet werden. In dem Innenvolumen können Fasern, beispielsweise Naturfasern, angeordnet sein, bevor das flüssige Grundmaterial eingeführt wird. Somit entsteht ein faserverstärktes Verbundbauteil.

Um das Innenvolumen gasdicht abzuschließen, liegen beispielsweise die Kanten des Bodens an den Seitenwänden an, so dass an dieser Stelle keine Luft in das Innenvolumen eindringen kann. Die Kanten des Bodens können mit einer Beschichtung beaufschlagt sein, welche eine dichtende Funktion hat, damit die Kanten des Bodens gasdicht an der Innenseite der Seitenwände anliegen. Allgemein kann diese Beschichtung der Kanten des Bodens auch als Dichtung bezeichnet werden und wird gegen eine das Innenvolumen abgrenzende Fläche einer Seitenwand gedrückt, wenn das Werkzeug in dem montierten Zustand ist. Als montierter Zustand wird derjenige Zustand beschrieben, in welchem alle Seitenwände so mit Bezug zu dem Boden montiert sind, dass sie das Innenvolumen unten und seitlich begrenzen. Aus diesem montierten Zustand kann das Werkzeug zerlegt werden, indem eine oder mehrere Seitenwände so bewegt werden, dass sie einen seitlichen Zugang zu dem Innenvolumen ermöglichen.

Grundsätzlich kann das Innenvolumen beliebige Formen annehmen. Das Innenvolumen kann seitlich beispielsweise von drei, vier oder mehr Seitenwänden abgegrenzt sein. Im Falle von drei Seitenwänden hat das Bauteil dann eine dreieckige Form, bei vier Seitenwänden ist die Form viereckig oder quadratisch, usw.

Benachbarte Seitenwände berühren einander in dem montierten Zustand in einem Kontaktbereich. Als Kontaktbereich der Seitenwände wird der Bereich bezeichnet, wo eine Seitenkante einer Seitenwand die benachbarte Seitenwand berührt und daran anliegt.

In einem bevorzugten Beispiel ist das Innenvolumen von vier gleich langen Seitenwänden abgegrenzt, wobei der vorgegebene Winkel zwischen benachbarten Seitenwänden erfindungsgemäß 90° ist, d.h. dass die Seitenwände senkrecht aufeinander stehen. Die äußere Gestalt des Bauteils ist somit in diesem bevorzugten Beispiel quadratisch.

Gemäß einer Ausführungsform ist der Boden gemäß einer komplexen Geometrie geformt, welche einem Negativ der komplexen Geometrie der mindestens einen Oberfläche des Bauteils entspricht.

Die komplexe Geometrie weicht von einer ebenen Oberfläche ab und kann beispielsweise eine mehrfach gekrümmte Oberfläche sein. Die von dem Boden des Innenvolumens geformte Oberfläche des Bauteils entspricht einer Sichtseite des Bauteils. Wenn das Bauteil beispielsweise an einer Fassade eines Gebäudes montiert wird, ist die Sichtseite des Bauteils von dem Gebäude abgewandt und bildet die von außen sichtbare Oberfläche des Gebäudes.

Gemäß einer weiteren Ausführungsform sind alle Seitenwände mit Bezug zu dem Boden schwenkbar.

Dies bedeutet, dass das Werkzeug Zugang zu dem ausgehärteten Bauteil in dem Innenvolumen ermöglicht. In einem solchen Zustand kann auch beispielsweise der Boden ausgetauscht werden, wenn ein Bauteil mit einer anders geformten Oberfläche hergestellt werden soll.

Eine Seitenwand ist mit einem Scharnier an dem Rahmen des Werkzeugs befestigt. In diesem Zustand hält der Rahmen die jeweilige Seitenwand in einer vorgegebenen Position mit Bezug zu dem Boden und schließt das Innenvolumen in einem Kontaktbereich zwischen Boden und Seitenwand gasdicht ab. Benachbarte Seitenwände können miteinander mit lösbaren Befestigungsmitteln (wie beispielsweise Schrauben, Klammern, Haken, etc.) befestigt sein. Auch der Kontaktbereich zwischen benachbarten und aneinander anliegenden Seitenwänden ist in dem montierten Zustand gasdicht geschlossen.

Die Seitenwände können in einem Kantenbereich mit einer Dichtung oder einer Beschichtung versehen sein, damit dieser Kontaktbereich gasdicht geschlossen wird.

Gemäß der Erfindung sind die Seitenwände jeweils in einem Winkel von 90° zueinander angeordnet.

Gemäß der Erfindung haben die Seitenwände zu dem Innenvolumen hin eine ebene Oberfläche.

Die Seitenwände formen die seitlichen Oberflächen des Bauteils. Indem die Seitenwände eben sind (und nicht gekrümmt), hat das hergestellte Bauteil ebene Seitenflächen. Damit können mittels Vakuuminfusion beispielsweise Paneele hergestellt werden, die einerseits eine Oberfläche mit einer komplexen Geometrie (mehrfachgekrümmte Oberfläche) haben und andererseits aber ebene und senkrecht zueinander verlaufende Seitenflächen, so dass die Paneele mit einem sehr geringen Spaltmaß nebeneinander angebracht werden können, beispielsweise für die Verkleidung eines Gebäudes.

Es ist selbstverständlich auch denkbar, dass das hier beschriebene Werkzeug auch mit einem ebenen Boden (statt einem gekrümmten oder mehrfach gekrümmten Boden) verwendet werden kann.

Gemäß der Erfindung weist das Werkzeug einen Rahmen auf, wobei die Seitenwände an dem Rahmen so befestigt sind, dass mindestens eine der Seitenwände über ein Scharnier mit dem Rahmen verbunden und mit Bezug zu dem Boden schwenkbar ist.

Erfindungsgemäß sind die Seitenwände über jeweils ein Scharnier mit dem Rahmen befestigt, so dass die Seitenwände um eine Schwenkachse des Scharniers schwenkbar sind und aus einem geschlossenen Zustand, in welchem die Seitenwände das Innenvolumen seitlich begrenzen, in einen geöffneten Zustand, in welchem jede weggeschwenkte Seitenwand einen Zugang zu dem Innenvolumen freigibt, geschwenkt werden können.

Die Seitenwände können einen weiteren Verschluss aufweisen, mit welchem benachbarte Seitenwände miteinander gekoppelt werden können. Durch diesen weiteren Verschluss kann die Kraft, mit welcher benachbarte Seitenwände in dem geschlossenen Zustand des Innenvolumens aneinandergedrückt werden, erhöht werden. Somit kann die Güte der gasdichten Verbindung zwischen benachbarten Seitenwänden verbessert und das ungewünschte Eindringen von Luft in das unter Vakuum stehende Innenvolumen verhindert werden.

Gemäß einer weiteren Ausführungsform weist das Werkzeug weiterhin eine Vakuumfolie auf, welche auf eine Oberkante der Seitenwände anbringbar ist, um das Innenvolumen gasdicht abzuschließen.

Die Vakuumfolie wird auf die Oberkanten der Seitenwände gelegt, wenn die Seitenwände in dem montierten Zustand sind. Die Seitenwände sind in dem montierten Zustand, wenn sie an dem Boden anliegen und das Innenvolumen seitlich begrenzen. Liegt nun die Vakuumfolie auf den Oberkanten der Seitenwände, ist das Innenvolumen seitlich von den Seitenwänden gasdicht abgeschlossen, unten von dem Boden, und gegenüberliegend von dem Boden von der Vakuumfolie gasdicht abgeschlossen. Nun kann Luft aus dem Innenvolumen abgesaugt werden. Die Vakuumfolie ist ein flexibles Bauteil. Wenn aus dem Innenvolumen Luft abgesaugt wird, beispielsweise mittels einer Vakuumpumpe, gibt die Vakuumfolie bis zu einem gewissen Grad nach und verkleinert das Innenvolumen bzw. übt einen Druck auf Bestandteile des zu formenden Bauteils aus, welche sich in dem Innenvolumen befinden.

Gemäß einer weiteren Ausführungsform ist in mindestens einer Seitenwand eine Öffnung angeordnet, welche es ermöglicht, in das Innenvolumen eine flüssige Komponente einzubringen.

Beispielsweise kann ein flüssiger Kunststoff oder ein flüssiges Harz in das Innenvolumen eingebracht werden, um dann in dem Innenvolumen auszuhärten. Bei der flüssigen Komponente handelt es sich um das oben angesprochene Grundmaterial des herzustellenden Bauteils.

Gemäß einem weiteren Aspekt ist angegeben, dass das hierin beschriebene Werkzeug zum Herstellen von großflächigen Faserverbundbauteilen, welche mindestens eine Oberfläche mit einer komplexen Geometrie haben, verwendet wird.

Insbesondere kann das Werkzeug verwendet werden, Faserverbundbauteile herzustellen, die eine Oberfläche mit einer komplexen Geometrie, beispielsweise einer mehrfach gekrümmten Oberfläche, aufweisen, wobei die Seitenflächen der Faserverbundbauteile allerdings eben sind und in einem vorgegebenen Winkel zueinanderstehen, so dass mehrere solcher Faserverbundbauteile mit aneinander angrenzenden Seitenflächen montiert werden können. Hierdurch wird ein niedriges Spaltmaß erreicht, wenn eine größere Oberfläche mit mehreren solcher nebeneinander angeordneten Faserverbundbauteilen verkleidet wird.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Werkzeugs mit einem Boden und vier Seitenwänden.
- Fig. 2: eine schematische Darstellung eines Werkzeugs, bei dem ein mehrfach gekrümmter Boden und zwei Seitenwände gezeigt sind.
- Fig. 3: eine schematische Darstellung einer Seitenwand.
- Fig. 4: eine schematische Darstellung eines Werkzeugs mit einer Vakuumfolie.
- Fig. 5: eine schematische Darstellung eines Bodens eines Werkzeugs.
- Fig. 6: eine schematische Darstellung eines Werkzeugs mit in dem Innenvolumen angeordneten Fasern.
- Fig. 7: eine schematische Darstellung eines Bauteils, welches mit einem in den vorherigen Figuren beschriebenen Werkzeug hergestellt ist.

Detaillierte Beschreibung von Ausführungsbeispielen Mit Bezug auf die Figuren wird nun ein beispielhaftes Werkzeug 100 beschrieben, wobei hier auch die einzelnen Schritte zum Herstellen eines Bauteils wiedergegeben werden.

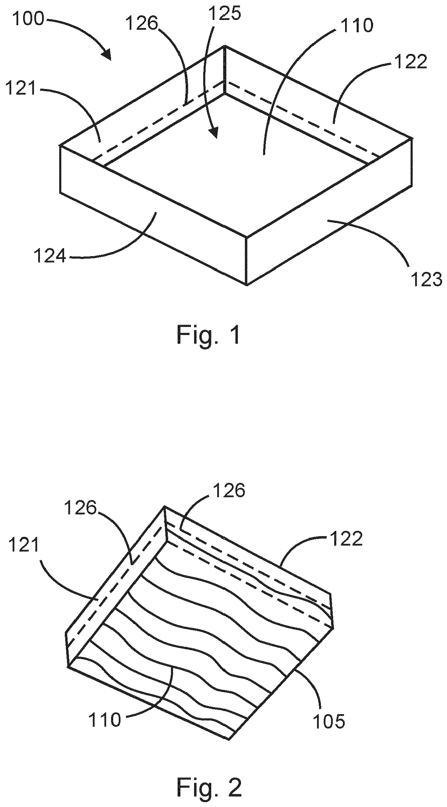

Fig. 1 zeigt ein Werkzeug 100. Das Werkzeug 100 enthält einen Boden 110 und vier Seitenwände 121, 122, 123, 124. Das Werkzeug 100 ist in Fig. 1 in dem montierten Zustand gezeigt. Die Seitenwände stehen senkrecht aufeinander und liegen aneinander an. Der Boden 110 ist in Umfangsrichtung von den Seitenwänden umgeben und gasdicht umschlossen. Der Boden110 und die Seitenwände 121, 122, 123, 124 umschließen teilweise ein Innenvolumen 125. In dieses Innenvolumen wird ein flüssiges Grundmaterial für das herzustellende Bauteil bis zu der Füllhöhe 126 gefüllt.

Es ist zu beachten, dass in Fig. 1 der Boden 110 einfachheitshalber ohne Krümmung dargestellt ist. In Fig. 2 hingegen ist ein Rahmen 105 gezeigt, auf welchem der Boden 110 aufliegt. Weiterhin sind die beiden Seitenwände 121, 122 sowie die Füllhöhe 126 als gestrichelte Linie gezeigt. Die Seitenwände sind beispielsweise ebenfalls mit dem Rahmen 105 lösbar mechanisch verbunden. Somit hält der Rahmen 105 in dem montierten Zustand die Seitenwände und den Boden in der gewünschten Position und fixiert diese mit Bezug zueinander.

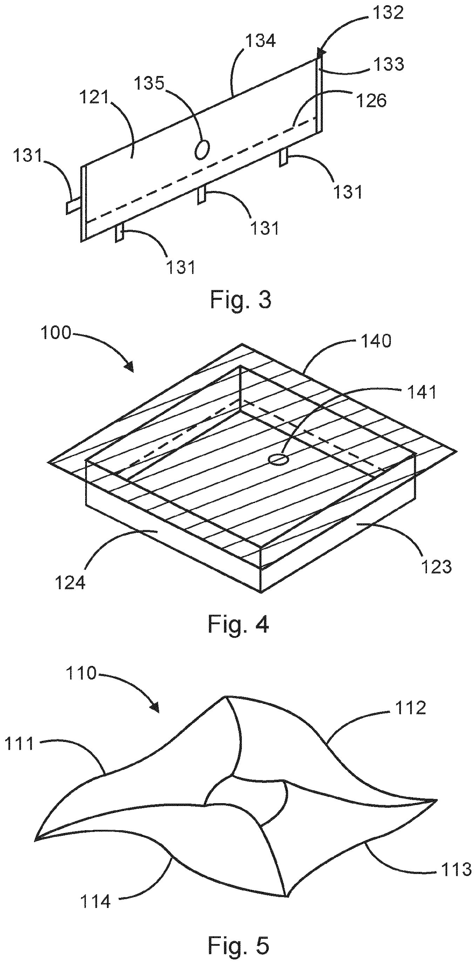

Fig. 3 zeigt eine schematische Darstellung einer einzelnen Seitenwand 121, um die Merkmale der Seitenwand zu beschreiben. Es ist zu beachten, dass die anderen Seitenwände des Werkzeugs 100 prinzipiell ähnlich aufgebaut sind, wie die in Fig. 3 gezeigte und hier beschriebene Seitenwand 121.

Die Seitenwand 121 enthält an der unteren Kante (gegenüberliegend zu der Oberkante 134) mehrere Kopplungselemente 131, welche dazu dienen, die Seitenwand mit Bezug zu dem Rahmen und/oder dem Boden (siehe Fig. 2) zu befestigen. Die Kopplungselemente können auch von der Seitenwand separate Komponenten wie Schrauben oder Klammern sein. Die Kopplungselemente können aber auch an der Seitenwand montiert sein, wie beispielsweise Haken oder Bügel, und dazu dienen, die Seitenwand an dem Rahmen und/oder dem Boden zu befestigen. Die Seitenwand 121 weist an einer seitlichen Kante ein weiteres Kopplungselemente auf, welches dazu dient, diese Seitenwand mit Bezug zu einer benachbarten Seitenwand zu fixieren. An der Seitenkante 132 ist eine Dichtung 133 gezeigt. Prinzipiell kann eine solche Dichtung an jeder Kante der Seitenwand 121 angeordnet sein. Die Dichtung 133 kann beispielsweise eine Gummidichtung oder Kunststoffdichtung sein oder aus einer Beschichtung der Kante bestehen. Die Dichtung 133 hat die Funktion, dass die Seitenwand mit ihren Kanten an den angrenzenden Komponenten gasdicht anliegt, so dass in diesem Kontaktbereich kein Gas und keine Luft durchdringen kann.

Die Seitenwand 121 weist weiterhin eine Öffnung 135 auf. Diese Öffnung 135 dient dazu, dass Grundmaterial für das zu fertigende Bauteil in flüssigem Zustand in das Innenvolumen einzufüllen, bis in dem Innenvolumen die Füllhöhe 126 erreicht ist. Eine solche Öffnung 135 kann in allen Seitenwänden oder lediglich in einigen Seitenwänden des Werkzeugs 100 vorhanden sein.

Fig. 4 zeigt das Werkzeug 100 in dem montierten Zustand, in welchem die Seitenwände, wovon hier lediglich die zwei Seitenwände 123, 124 mit Bezugszeichen versehen sind, mit dem Boden das Innenvolumen abgrenzen. Eine Vakuumfolie 140 liegt auf den Oberkanten der Seitenwände auf. Der Boden und die Vakuumfolie sind einander gegenüberliegend angeordnet. Die Vakuumfolie verschließt das Innenvolumen nun vollständig.

In der Vakuumfolie 140 ist eine Öffnung in Form eines Flansches 141 angeordnet. An diesem Flansch kann ein Schlauch einer Vakuumpumpe (nicht gezeigt) angeschlossen werden, um Luft aus dem Innenvolumen abzusaugen. Hierbei drückt der äußere Atmosphärendruck die Vakuumfolie 140 in Richtung des Bodens und der Seitenwände und übt dabei einen Druck auf das in dem Innenvolumen befindliche Grundmaterial (nicht gezeigt) aus. In diesem Zustand wird das Grundmaterial belassen, bis es aushärtet. Sobald das Grundmaterial ausgehärtet ist, wird das Vakuum gelöst, die Vakuumfolie entfernt und mindestens eine Seitenwand aus dem montierten Zustand entnommen, um einen Zugriff auf das in dem Innenvolumen befindliche Bauteil zu ermöglichen.

Fig. 5 zeigt beispielhaft einen Boden 110, welcher eine mehrfach gekrümmte Fläche darstellt. Der Boden kann letztlich beliebig geometrisch geformt sein. Der Boden 110 weist in diesem Beispiel vier Kanten 111, 112, 113, 114 auf. In dem montierten Zustand liegt jeweils eine Seitenwand an einer der vier Kanten an und der Kontaktbereich zwischen jeweils einer Kante des Bodens und der daran anliegenden Seitenwand ist gasdicht geschlossen. Die Kanten des Bodens können mit einer Dichtung oder einer Beschichtung beaufschlagt sein, wie mit Bezug zu der in Fig. 3 gezeigten Seitenwand beschrieben.

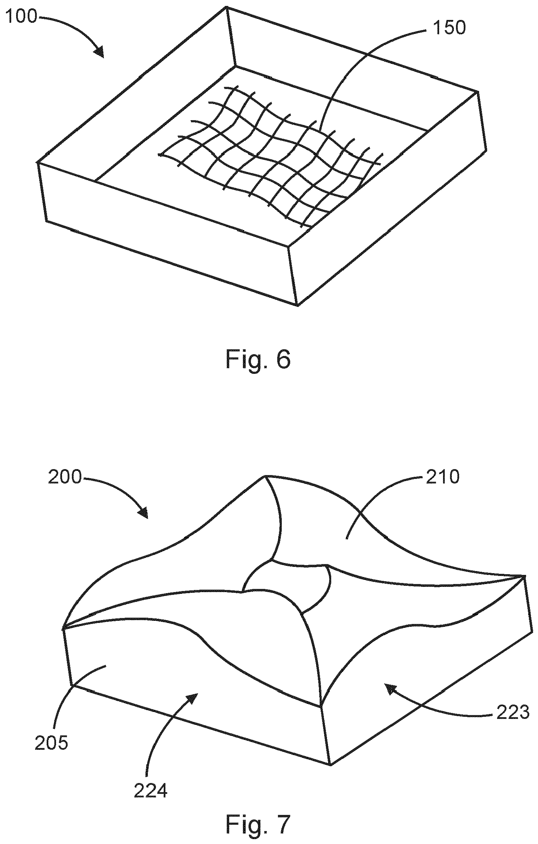

Fig. 6 zeigt ein Werkzeug 100, in dessen Innenvolumen sich Fasern 150 in Form eines Gewebes (wie beispielsweise textile Halbzeuge, Fasern, Vliese, oder Matten) befinden. Es können mehrere solcher Schichten von Fasern 150 in dem Innenvolumen abgelegt werden. Anschließend wird durch eine oder mehrere Öffnungen in den Seitenwänden das flüssige Grundmaterial, beispielsweise Harz oder ein Kunststoff, in das Innenvolumen eingebracht. Nun infiltriert das flüssige Grundmaterial die Fasern und härtet aus. Sodann kann das ausgehärtete Bauteil wie weiter oben beschrieben entnommen werden.

Mit dem in den vorherigen Figuren beschriebenen Werkzeug 100 kann ein Bauteil durch Ausführung der folgenden Schritte hergestellt werden: Zunächst wird das Werkzeug mit einem Boden mit der gewünschten Form und den Seitenwänden in den montierten Zustand gebracht, in welchem die Seitenwände zueinander und zu dem Boden gasdicht anliegen; dann wird ein Bauteil mittels Vakuuminfusion hergestellt, was wiederum die folgenden Unterschritte enthält: (a) es werden Fasern als trockenes Vorgelege in einer gewünschten Menge, Stärke und Gestalt in das Innenvolumen gelegt; (b) über die Fasern wird ein Verteilervlies und die Vakuumfolie gelegt, so dass das Innenvolumen vollständig gasdicht umschlossen ist; (c) Vakuum wird hergestellt, indem Luft aus dem Innenvolumen abgesaugt wird, wodurch die Vakuumfolie die Fasern an die Geometrie des Bodens und entsprechend formt; (d) das flüssige Grundmaterial wird in das Innenvolumen unter der Vakuumfolie eingeleitet und infiltriert das Fasergelege; (e) und nun härtet das Bauteil aus; damit ist das Bauteil mittels Vakuuminfusion hergestellt; letztlich muss das Bauteil aus dem Innenvolumen entnommen werden, wozu mindestens eine Seitenwand des Werkzeugs von dem Boden weg bewegt wird, um einen Zugriff auf das in dem Innenvolumen befindliche Bauteil zu ermöglichen.

Das hier beschriebene Werkzeug ermöglicht es, dieses Verfahren umzusetzen, weil das Werkzeug modular zusammensetzbar und zerlegbar ist, wodurch ein Bauteil einer gewünschten Gestalt mittels Vakuuminfusion hergestellt und aus dem Werkzeug entnommen werden kann.

Mit dem hier beschriebenen Ansatz können Faserverbundbauteile unter Einsatz lokal verstärkter Naturfaserhalbzeuge hergestellt werden. Das Werkzeug und das damit mögliche Herstellungsverfahren bieten ein hohes Maß an Freiheit für die Form der hergestellten Bauteile. So können beispielsweise naturfaserverstärkte Infusionskomponenten mit lokalen Verstärkungen hergestellt werden, welche beispielsweise für die Abschattung und thermische Isolierung von Gebäuden verwendet werden können. Die hergestellten Bauteile erlauben sehr geringe Spaltmaße zwischen benachbarten Bauteilen und verbessern damit die Isolationseigenschaften von mehreren nebeneinander angeordneten Bauteilen.

Fig. 7 zeigt ein Bauteil 200, welches mit einem Werkzeug 100 wie mit Bezug zu den vorherigen Figuren beschrieben hergestellt wurde. Das Bauteil 200 weist einen Körper 205 auf, welcher durch das Innenvolumen des Werkzeugs 100 geformt ist. Der Körper 205 weist eine Oberfläche 210 mit komplexer Geometrie auf. Der Körper 205 ist in Umfangsrichtung von ebenen Seitenflächen, von denen nur zwei mit Bezugszeichen 223, 224 versehen sind, definiert.

Bei dem Bauteil 200 kann es sich um ein Paneel handeln, welches für eine Fassadenverkleidung genutzt werden kann. Das Bauteil kann dabei relativ große Dimensionen aufweisen, wie beispielsweise Kantenlängen von 800 mm. In dem hier gezeigten Beispiel ist das Bauteil 200 quadratisch geformt und hat ebene Seitenwände, so dass das Bauteil beliebig neben andere Bauteile gleicher Kantenlänge platziert werden kann. Dabei kann die Oberfläche 210 mit komplexer Geometrie für jedes Bauteil individuell gefertigt sein.

Das Bauteil 200 ist beispielsweise ein Faserverbundbauteil mit Naturfasern.

### Bezugszeichenliste

- 100: Werkzeug
- 105: Rahmen
- 110: Boden
- 111: erste Kante
- 112: zweite Kante
- 113: dritte Kante
- 114: vierte Kante
- 121: erste Seitenwand
- 122: zweite Seitenwand
- 123: dritte Seitenwand
- 124: vierte Seitenwand
- 125: Innenvolumen
- 126: Füllhöhe
- 131: Kopplungselemente
- 132: Seitenkante
- 133: Dichtung
- 134: Oberkante, ggf. beschichtet mit einer versiegelnden Schicht
- 135: Öffnung
- 140: Vakuumfolie
- 141: Flansch
- 150: Fasern
- 200: Bauteil
- 205: Körper
- 210: Oberfläche mit komplexer Geometrie
- 223: Seitenfläche
- 224: Seitenfläche

## Patentansprüche

1. Werkzeug (100) zum Herstellen eines Bauteils (200) mit mindestens einer Oberfläche (210) mit komplexer Geometrie, das Werkzeug (100) aufweisend:
einen Boden (110);
eine Mehrzahl von orthogonal zueinander ausgerichteten Seitenwänden (121, 122, 123, 124);
einen Rahmen (105);
wobei der Boden (110) und die Mehrzahl von Seitenwänden (121, 122, 123, 124) in dem Rahmen so zueinander befestigt sind, dass ein Innenvolumen (125) gebildet wird, in welchem das Bauteil (200) durch Vakuuminfusion formbar ist;
wobei die Seitenwände (121, 122, 123, 124) zu dem Innenvolumen (125) hin eine ebene Oberfläche haben;
wobei jeweils benachbarte Seitenwände der Mehrzahl von Seitenwänden (121, 122, 123, 124) in einem vorgegebenen Winkel zueinander angeordnet sind;
wobei der Boden (110) umlaufend gasdicht mit den Seitenwänden (121, 122, 123, 124) abschließt;
wobei jeweils benachbarte Seitenwände der Mehrzahl von Seitenwänden (121, 122, 123, 124) in einem gegenseitigen Kontaktbereich gasdicht aneinander liegen;
wobei mindestens eine Seitenwand (121, 122, 123, 124) von dem Boden wegbewegbar ist, um einen Zugang zu einem ausgehärteten Bauteil (200) in dem Innenvolumen (125) zu ermöglichen, so dass das Bauteil (200) aus dem Innenvolumen (125) entnehmbar ist;
wobei die Mehrzahl von Seitenwänden (121, 122, 123, 124) so an dem Rahmen (105) befestigt ist, dass mindestens eine der Seitenwände (121, 122, 123, 124) über ein Scharmier mit dem Rahmen (105) verbunden und mit Bezug zu dem Boden (110) schwenkbar ist.

2. Werkzeug (100) nach Anspruch 1,
wobei der Boden (110) gemäß einer komplexen Geometrie geformt ist, welche einem Negativ der komplexen Geometrie der mindestens einen Oberfläche des Bauteils entspricht.

3. Werkzeug (100) nach Anspruch 1 oder 2,
wobei alle Seitenwände (121, 122, 123, 124) mit Bezug zu dem Boden (110) schwenkbar sind.

4. Werkzeug (100) nach einem der voranstehenden Ansprüche,
weiterhin aufweisend eine Vakuumfolie (140), welche auf eine Oberkante (134) der Seitenwände (121, 122, 123, 124) anbringbar ist, um das Innenvolumen (125) gasdicht abzuschließen.

5. Werkzeug (100) nach einem der voranstehenden Ansprüche,
wobei in mindestens einer Seitenwand eine Öffnung (135) angeordnet ist, welche es ermöglicht, in das Innenvolumen (125) eine flüssige Komponente einzubringen.

6. Verwendung eines Werkzeugs (100) nach einem der voranstehenden Ansprüche zum Herstellen von großflächigen Faserverbundbauteilen (200), welche mindestens eine Oberfläche mit einer komplexen Geometrie haben.
